(19) Europäisches Patentamt
European Patent Office
Office européen des brevets

(11) **EP 3 220 106 B1**

(12) **EUROPÄISCHE PATENTSCHRIFT**

(45) Veröffentlichungstag und Bekanntmachung des Hinweises auf die Patenterteilung:
**16.05.2018   Patentblatt 2018/20**

(51) Int Cl.:
***G01D 5/38*** *(2006.01)*     ***G01B 11/02*** *(2006.01)*
***G01B 11/06*** *(2006.01)*

(21) Anmeldenummer: **17158798.3**

(22) Anmeldetag: **02.03.2017**

(54) **OPTISCHER ABSTANDSSENSOR UND POSITIONSMESSEINRICHTUNG MIT EINEM DERARTIGEN ABSTANDSSENSOR**

OPTICAL DISTANCE SENSOR AND POSITION MEASURING DEVICE COMPRISING SUCH A DISTANCE SENSOR

CAPTEUR TÉLÉMÉTRIQUE OPTIQUE ET DISPOSITIF DE MESURE DE POSITION COMPRENANT UN TEL CAPTEUR TÉLÉMÉTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.03.2016   DE 102016204313**

(43) Veröffentlichungstag der Anmeldung:
**20.09.2017   Patentblatt 2017/38**

(73) Patentinhaber: **Dr. Johannes Heidenhain GmbH 83301 Traunreut (DE)**

(72) Erfinder: **BENNER, Ulrich 83308 Trostberg (DE)**

(56) Entgegenhaltungen:
**EP-A2- 2 450 672     DE-A1-102010 043 615
DE-U1- 9 018 079     US-A- 4 025 197
US-B2- 7 474 091**

EP 3 220 106 B1

**Beschreibung**

Die vorliegende Erfindung betrifft einen optischen Abstandssensor sowie eine Positionsmesseinrichtung mit einem derartigen Abstandssensor.

Besonders einfache optische Positionsmesseinrichtungen können als im Auflicht betriebene Systeme aufgebaut werden, die eine Maßverkörperung mit einer Reflexions-Messteilung und eine hierzu in einer lateralen Messrichtung bewegliche Abtasteinheit umfassen. In der Abtasteinheit ist eine möglichst punktförmige Lichtquelle angeordnet, deren Strahlung divergent in Richtung der Reflexions-Messteilung emittiert wird. Diese weist alternierend angeordnete Bereiche unterschiedlicher Reflektivität auf. Aus den in Richtung der Abtasteinheit zurückreflektierten Strahlenbündeln resultiert in einer Detektionsebene der Detektoranordnung aus der Wechselwirkung der Strahlenbündel mit der Reflexions-Messteilung ein positionsabhängiges Muster, das die Position der Abtasteinheit gegenüber der Reflexions-Messteilung entlang der Messrichtung angibt. Derartige Positionsmesseinrichtungen sind in der Regel empfindlich gegenüber Verkippungen zwischen Maßverkörperung und Abtasteinheit, insbesondere gegenüber sog. Nick-Bewegungen. Unter einer Nick-Bewegung bzw. Nick-Kippung sei nachfolgend eine Verkippung von Maßverkörperung und Abtasteinheit um eine Achse verstanden, die in der Messteilungsebene oder parallel zur Messteilungsebene liegt und senkrecht zur Messrichtung orientiert ist.

Es ist weiterhin bekannt, dass zur Korrektur derartiger Fehler, die laufende Erfassung solcher Nickbewegungen mittels ein oder mehrerer Abstandssensoren erfolgen kann. Beispielsweise sei in diesem Zusammenhang auf die US 7,474,091 B2 verwiesen, die eine magnetische Positionsmesseinrichtung betrifft und zur Abstandsmessung zwei quadratische Leiterbahnstrukturen auf einer Leiterplatte als induktive Abstandssensoren vorschlägt.

Aus der DE 10 2010 043 615 A1 der Anmelderin ist ein optischer Abstandssensor bekannt. Dieser kann jedoch nicht in der oben diskutierten Positionsmesseinrichtung mit einer Reflexions-Messteilung eingesetzt werden.

Die Dokumente US 4 025 197 A, DE 90 18 079 U1 sowie EP 2 450 672 A2 offenbaren weitere ähnliche Abstandssensoren.

Aufgabe der vorliegenden Erfindung ist es, einen optischen Abstandssensor anzugeben, der sowohl allein funktionsfähig als auch zur Integration in eine Positionsmesseinrichtung geeignet ist.

Diese Aufgabe wird erfindungsgemäß durch einen optischen Abstandssensor mit den Merkmalen des Anspruchs 1 gelöst.

Vorteilhafte Ausführungen des erfindungsgemäßen optischen Abstandssensors ergeben sich aus den Maßnahmen in den abhängigen Ansprüchen.

Desweiteren wird eine Positionsmesseinrichtung mit einem darin integrierten, erfindungsgemäßen optischen Abstandssensor angegeben.

Der erfindungsgemäße optische Abstandssensor umfasst eine erste Lichtquelle in einer ersten Emissionsebene, einen Reflektor, zwei als Transmissionsgitter ausgebildete Abtastgitter mit jeweils einer definierten Gitterperiode, eine Detektoranordnung sowie eine Auswerteeinheit. Die von der ersten Lichtquelle emittierten Strahlenbündel beaufschlagen den Reflektor und erfahren eine Rückreflexion. Anschließend durchlaufen die rückreflektierten Strahlenbündel das erste und zweite Abtastgitter, so dass in einer Detektionsebene der Detektoranordnung aus der Wechselwirkung der Strahlenbündel mit den durchlaufenen Abtastgittern ein periodisches Streifenmuster mit einer definierten Streifenmusterperiode resultiert. Die Auswerteeinheit ist dazu ausgebildet und eingerichtet, aus der ermittelten Streifenmusterperiode und weiteren bekannten Geometrie-Parametern des Abstandssensors den Abstand zwischen der Detektionsebene und dem Reflektor entlang einer ersten Messrichtung zu bestimmen, die senkrecht zum Reflektor orientiert ist.

Die beiden Abtastgitter können auf der Ober- und Unterseite einer transparenten Abtastplatte angeordnet sein.

Es ist möglich, dass die beiden Abtastgitter die identische Gitterperiode aufweisen.

Mit Vorteil ist die Auswerteeinheit dazu ausgebildet und eingerichtet, den Abstand (ATA) zwischen der Detektionsebene und dem Reflektor gemäß der Beziehung

$$ATA = 0.5 \cdot (VP / T1 + 1) \cdot v + 0.5 \cdot w - 0.5 \cdot D$$

zu ermitteln, mit

ATA := Abstand zwischen Detektionsebene und Reflektor

VP := Streifenmusterperiode in Detektionsebene

T1 := Gitterperiode der Abtastgitter

v := optisch wirksamer Abstand der beiden Abtastgitter

w := Abstand zwischen Detektionsebene und zweitem Abtastgitter

D := Abstand zwischen erster Emissionsebene und erstem Abtastgitter

Ferner ist es möglich, dass die erste Lichtquelle, die Abtastgitter sowie die Detektoranordnung in einer Abtasteinheit angeordnet sind, die mindestens entlang der ersten Messrichtung gegenüber dem Reflektor relativ-beweglich angeordnet ist.

Desweiteren kann eine Positionsmesseinrichtung mit einem erfindungsgemäßen Abstandssensor ausgestattet werden. Hierbei ermöglicht die Positionsmesseinrichtung eine Positionsbestimmung entlang einer zweiten Messrichtung, entlang der eine Abtasteinheit gegenüber einer Maßverkörperung mit einer Reflexions-Messteilung relativ-beweglich angeordnet ist, wobei die zweite Messrichtung senkrecht zur ersten Messrichtung orientiert ist. Neben der ersten Lichtquelle, den zwei Abtastgittern und der Detektoranordnung umfasst die Abtasteinheit eine zweite Lichtquelle in einer zweiten Emissionsebene. Die sich entlang der zweiten Messrichtung erstreckende Maßverkörperung fungiert als Reflektor. Die von der zweiten Lichtquelle emittierten Strahlenbündel beaufschlagen die Reflexions-Messteilung und erfahren eine Rückreflexion. In der Detektionsebene der Detektoranordnung resultiert aus der Wechselwirkung der Strahlenbündel mit der Reflexions-Messteilung ein positionsabhängiges Muster, das die Position der Abtasteinheit gegenüber der Maßverkörperung entlang der zweiten Messrichtung angibt.

Mit Vorteil wird in der Abtasteinheit in der Anordnungsebene des ersten Abtastgitters eine spaltförmige Blende derart angeordnet, dass die von der ersten Lichtquelle emittierten Strahlenbündel die Blende durchlaufen, bevor sie auf die Maßverkörperung auftreffen.

Dabei ist es möglich, dass die Breite der Blende der doppelten Strukturbreite der Reflexions-Messteilung entspricht.

In einer vorteilhaften Ausführungsform kann die erste und zweite Lichtquelle jeweils als Punktlichtquelle ausgebildet sein.

Desweiteren ist möglich, dass die erste und zweite Lichtquelle verschiedene Emissionswellenlängen aufweisen.

Ferner kann vorgesehen sein, dass die Reflexions-Messteilung und/oder deren umgebende Bereiche auf der Maßverkörperung eine wellenlängenabhängige Reflektivität aufweisen.

In einer weiteren Ausführungsform kann die erste Lichtquelle eine Emissionswellenlänge aufweisen, für die die Reflexions-Messteilung eine geringe Reflektivität und deren umgebende Bereiche auf der Maßverkörperung eine hohe Reflektivität besitzen.

Mit Vorteil umfasst die Detektoranordnung eine periodische Anordnung optoelektronischer Detektorelemente entlang der zweiten Messrichtung, wobei die Detektorelemente über die Auswerteeinheit einzeln auslesbar sind.

Es kann desweiteren vorgesehen sein, dass die Auswerteeinheit dazu eingerichtet und ausgebildet ist, wahlweise eine der beiden Lichtquellen zu aktivieren und je nach aktivierter Lichtquelle die Detektoranordnung in den zur aktivierten Lichtquelle gehörigen Auswertemodus umzuschalten, um entweder den Abstand zwischen der Detektionsebene und dem Reflektor entlang der ersten Messrichtung zu bestimmen oder die Position der Abtasteinheit gegenüber der Reflexions-Messteilung entlang der zweiten Messrichtung zu bestimmen.

Ferner ist es möglich, dass die Auswerteeinheit dazu ausgebildet und eingerichtet ist, aus den über die Detektoranordnung erfassten Signalen den Nickwinkel der Abtasteinheit gegenüber der Reflexions-Messteilung zu bestimmen, wobei der Nickwinkel die Verkippung der Abtasteinheit um eine Achse angibt, die senkrecht zur zweiten Messrichtung und parallel zur Messteilungsebene orientiert ist.

Schließlich kann die Auswerteeinheit desweiteren dazu ausgebildet und eingerichtet sein, Positionssignale in Bezug auf eine Bewegung entlang der zweiten Messrichtung um Nickwinkel-abhängige Fehler zu korrigieren.

Der erfindungsgemäße optische Abstandssensor kann sowohl als reiner Abstandssensor als auch integriert in einer im Auflicht betriebenen Positionsmesseinrichtung eingesetzt werden, die innerhalb eines bestimmten Abtastabstands-Toleranzbereichs funktionsfähig ist. Im letztgenannten Fall ist es möglich, mit Hilfe des Abstandssensors Nick-Kippungen von Abtasteinheit und Maßverkörperung messtechnisch zu erfassen und daraus resultierende Messfehler bei der Positionsbestimmung zu kompensieren. Desweiteren ergeben sich für die Positionsmesseinrichtung mit einem derartigen Abstandssensor weitere Einsatzmöglichkeiten in Messaufgaben, in denen neben der Erfassung einer lateralen Relativbewegung noch zusätzlich die Erfassung einer hierzu senkrechten Relativbewegung erforderlich ist; d.h. es resultiert eine Positionsmesseinrichtung zur Erfassung von Positionen entlang zweier zueinander senkrechter Messrichtungen.

Weitere Vorteile sowie Einzelheiten der vorliegenden Erfindung ergeben sich aus der nachfolgenden Beschreibung von Ausführungsbeispielen anhand der beiliegenden Figuren.

Es zeigt hierbei

Figur 1        eine schematisierte Darstellung des Abtaststrahlengangs im erfindungsgemäßen optischen Abstandssensor;

Figur 2        eine Draufsicht auf die Detektionsebene des optischen Abstandssensors aus Figur 1;

Figur 3a, 3b      je eine Ansicht der Ober- und Unterseite der Abtastplatte des optischen Abstandssensors aus Figur 1;

Figur 4a        eine schematisierte Darstellung des Abtaststrahlengangs in einer mit dem erfindungsgemäßen optischen Abstandssensor ausgestatteten Positionsmesseinrichtung in einer seitlichen Schnittansicht;

Figur 4b        eine Darstellung des Abtaststrahlengangs der Positionsmesseinrichtung aus Figur 4a in einer anderen seitlichen Schnittansicht;

Figur 5         eine Ansicht der Positionsmesseinrichtung aus den Figuren 4a, 4b von unten;

Figur 6         eine Draufsicht auf die Detektionsebene der Positionsmesseinrichtung aus den Figuren 4a, 4b;

Figur 7a, 7b    je eine Ansicht der Ober- und Unterseite der Abtastplatte der optischen Positionsmesseinrichtung aus Figur 4a, 4b;

Figur 8         eine schematisierte Teil-Darstellung des Abtaststrahlengangs zur Erläuterung der geometrischen Verhältnisse bei einer Nick-Kippung.

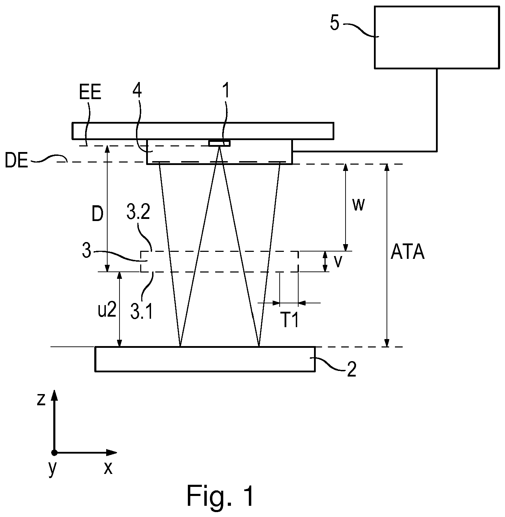

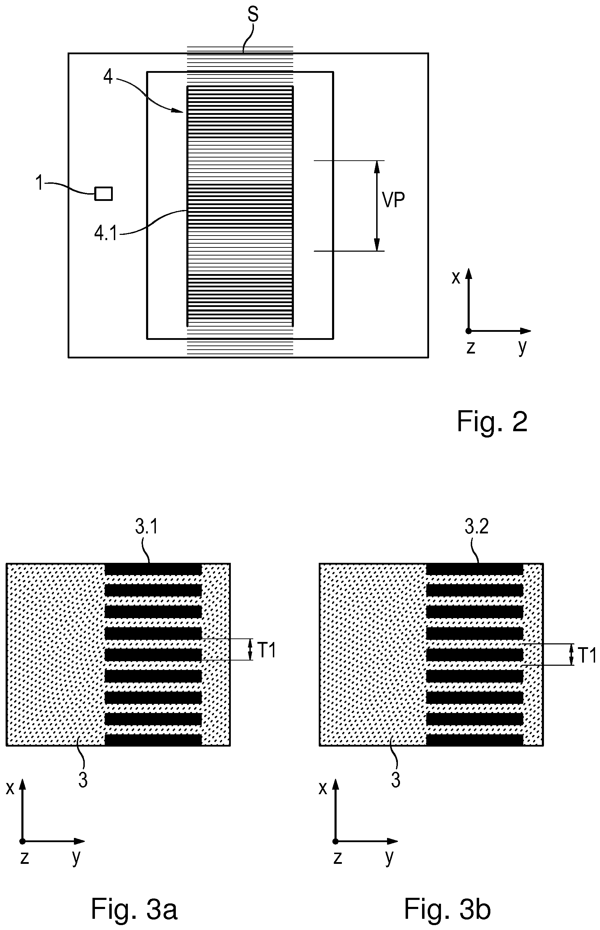

Anhand der schematisierten Abtaststrahlengang-Darstellung in Figur 1 sowie den verschiedenen Ansichten in den Figuren 2, 3a und 3b sei nachfolgend das Grundprinzip des erfindungsgemäßen optischen Abstandssensors erläutert. Dieser umfasst eine erste Lichtquelle 1, einen Reflektor 2, zwei als Transmissionsgitter ausgebildete Abtastgitter 3.1, 3.2, eine Detektoranordnung 4 sowie eine Auswerteeinheit 5. Mit Hilfe des Abstandssensors ist die Bestimmung des Abstands ATA zwischen der Detektionsebene DE der Detektoranordnung 4 und dem Reflektor 2 entlang einer vertikalen Richtung möglich. Diese Richtung sei nachfolgend als erste Messrichtung z bezeichnet und ist senkrecht zum Reflektor 2 orientiert.

Die erste Lichtquelle 1, ausgebildet als Punktlichtquelle und angeordnet in einer ersten Emissionsebene EE, emittiert divergierend Strahlenbündel mit einer ersten Emissionswellenlänge $\lambda_1$. Als erste Lichtquelle 1 kommt beispielsweise eine VCSEL-Lichtquelle (Vertical Cavity Surface Emitting Laser) oder eine LED mit hinreichend kleiner räumlicher Ausdehnung in Betracht, welche Strahlung mit der Emissionswellenlänge $\lambda_1$ aussendet, die z.B. im Bereich zwischen 630nm und 950nm liegen kann. Die von der ersten Lichtquelle 1 emittierten Strahlenbündel beaufschlagen den als Planspiegel ausgebildeten Reflektor 2, ohne dabei vorher die Abtastgitter 3.1, 3.2 zu durchlaufen, die lediglich in bestimmten Teilbereichen auf der Ober- und Unterseite einer transparenten Abtastplatte 3 angeordnet sind. Figur 3a zeigt die in Richtung des Reflektors 2 orientierte Seite der Abtastplatte 3 (Unterseite) mit dem ersten Abtastgitter 3.1; in Figur 3b ist eine Ansicht der der Detektoranordnung 4 zugewandten Seite der Abtastplatte 3 (Oberseite) mit dem zweiten Abtastgitter 3.2 gezeigt. Am Reflektor 2 erfahren die von der Lichtquelle 1 her einfallenden Strahlenbündel eine Rückreflexion und durchlaufen anschließend das erste und zweite Abtastgitter 3.1, 3.2. Beide Abtastgitter 3.1, 3.2 sind im vorliegenden Ausführungsbeispiel als Transmissions-Amplitudengitter mit periodisch angeordneten lichtdurchlässigen und lichtundurchlässigen Bereichen ausgebildet und besitzen wie aus den Figuren 3a, 3b ersichtlich die identische Gitterperiode T1; grundsätzlich möglich wäre an dieser Stelle im Übrigen auch die Verwendung von Phasengittern. Aus der Wechselwirkung der Strahlenbündel mit den beiden Abtastgittern 3.1, 3.2 resultiert in einer Detektionsebene DE der Detektoranordnung 4 schließlich ein periodisches Streifenmuster S, das die Streifenmusterperiode VP aufweist. Eine Ansicht der Detektionsebene DE mit dem dort resultierenden Streifenmuster S sowie der Detektoranordnung 4 ist in Figur 2 gezeigt.

Wie ebenfalls aus Figur 2 ersichtlich, umfasst die Detektoranordnung 4 eine entlang der Richtung x in der Detektionsebene vorgesehene periodische Anordnung optoelektronischer Detektorelemente 4.1. Die Detektorelemente 4.1 sind über die Auswerteeinheit 5 einzeln auslesbar, so dass derart über die Auswerteeinheit 5 und mit bekannten Bilderkennungsverfahren die Streifenmusterperiode VP des resultierenden Streifenmusters S in der Detektionsebene DE ermittelbar ist. Die Periodizität der Detektorelemente 4.1 in der Detektoranordnung 4 kann im Fall der ausschließlichen Nutzung der erfindungsgemäßen Vorrichtung als Abstandssensor grundsätzlich beliebig gewählt werden; die Periodizität einer geeigneten Detektoranordnung 14 kann in diesem Fall beispielsweise 5 $\mu$m betragen.

Mit der derart bestimmten Streifenmusterperiode VP und weiteren bekannten Geometrie-Parametern des Abstandssensors kann dann die Auswerteeinheit 5 den Abstand ATA zwischen der Detektionsebene DE und dem Reflektor 2 entlang der ersten Messrichtung z bestimmen. Zur Bestimmung des Abstands ATA wird von der Auswerteeinheit 5 dabei die folgende Beziehung (1) verwendet:

$$ATA = 0.5 \cdot (VP / T1 + 1) \cdot v + 0.5 \cdot w - 0.5 \cdot D \qquad (Gl.\ 1)$$

mit:

ATA := Abstand zwischen Detektionsebene und Reflektor
VP := Streifenmusterperiode in Detektionsebene
T1 := Gitterperiode der Abtastgitter
v := optisch wirksamer Abstand der beiden Abtastgitter
w := Abstand zwischen Detektionsebene und zweitem Abtastgitter
D := Abstand zwischen erster Emissionsebene und erstem Abtastgitter

In einer möglichen Ausführungsform des erfindungsgemäßen Abstandssensors werden die verschiedenen Geometrieparameter T1, v, w und D etwa folgendermaßen gewählt:

$T1 = 50\mu m$
$v = 0.5mm$
$w = 1.0mm$
$D = 2.0mm$

Zusammen mit einer über die Auswerteeinheit 5 ermittelten Streifenmusterperiode $VP = 1000\mu m$ ergibt sich dann ein Abstand ATA = 4.75mm zwischen der Detektionsebene DE und dem Reflektor 2.

Im Rahmen einer geeigneten Umsetzung des erläuterten Abstandssensor-Konzepts erweist sich ferner als vorteilhaft, wenn die erste Lichtquelle 1, die beiden Abtastgitter 3.1, 3.2 sowie die Detektoranordnung 4 gemeinsam in einer - nicht in den Figuren gezeigten - Abtasteinheit angeordnet werden, die entlang der ersten Messrichtung z gegenüber dem Reflektor 2 relativ-beweglich ist. Die Abtasteinheit ist dann mechanisch mit einem ersten Objekt verbunden, der Reflektor 2 ist mechanisch mit einem zweiten Objekt verbunden; die beiden Objekte sind mindestens entlang der ersten Messrichtung z relativ beweglich zueinander. Bei den beiden Objekten kann es sich beispielsweise um relativ zueinander bewegliche Maschinenkomponenten handeln, deren Abstand entlang der ersten Messrichtung z zu bestimmen ist. Die Auswerteeinheit 5 kann ebenfalls in der Abtasteinheit angeordnet werden; ebenso ist es aber möglich, die Signale der Detektoranordnung 4 an eine entfernt angeordnete Auswerteeinheit zur Weiterverarbeitung zu übertragen.

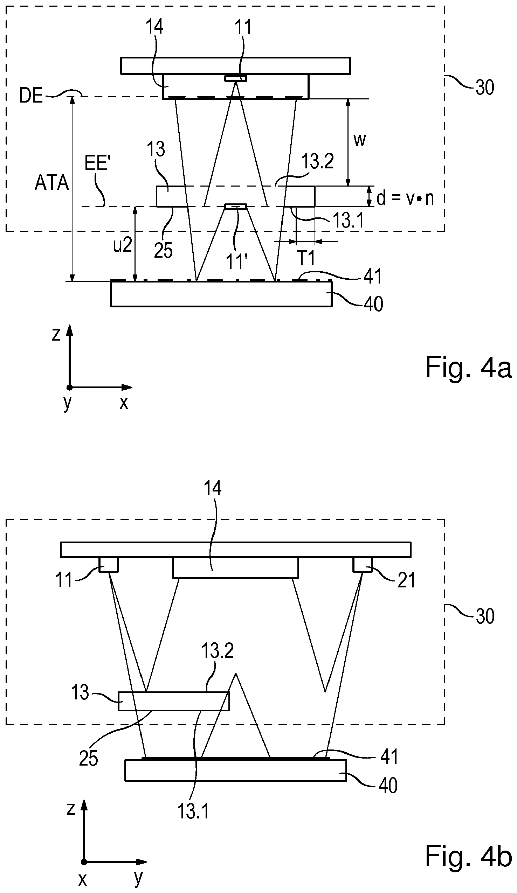

Der erfindungsgemäße Abstandssensor kann ferner nicht nur als reiner Abstandssensor Verwendung finden, er eignet sich darüber hinaus insbesondere zur Integration in eine Positionsmesseinrichtung, die eine Positionsbestimmung entlang einer weiteren Richtung ermöglicht, die nachfolgend als zweite Messrichtung x bezeichnet sei. Anhand der Figuren 4a, 4b, 5, 6 7a, 7b und 8 wird nachfolgend eine derartige Positionsmesseinrichtung mit einem darin integrierten, erfindungsgemäßen Abstandssensor erläutert.

Entlang der zweiten Messrichtung x sind eine Abtasteinheit 30 und eine Maßverkörperung 40 mit einer Reflexions-Messteilung 41 der Positionsmesseinrichtung relativ-beweglich angeordnet, wobei die zweite - im wesentlichen laterale - Messrichtung x senkrecht zur ersten - im wesentlichen vertikalen - Messrichtung z des Abstandssensors orientiert ist. Abtasteinheit 30 und Maßverkörperung 40 sind mit zwei - nicht dargestellten - Objekten mechanisch gekoppelt bzw. verbunden, die zueinander entlang der beiden Messrichtungen x, z beweglich sind. Bei den Objekten kann es sich wiederum um entsprechende Maschinenkomponenten handeln, die die erwähnte Relativ-Beweglichkeit zueinander aufweisen. Nicht in den Figuren gezeigt ist eine Auswerteeinheit, der die über die Abtasteinheit 30 generierten Signale zur Weiterverarbeitung zugeführt werden. Grundsätzlich kann die Auswerteeinheit in der Abtasteinheit 30 angeordnet sein oder aber entfernt hiervon.

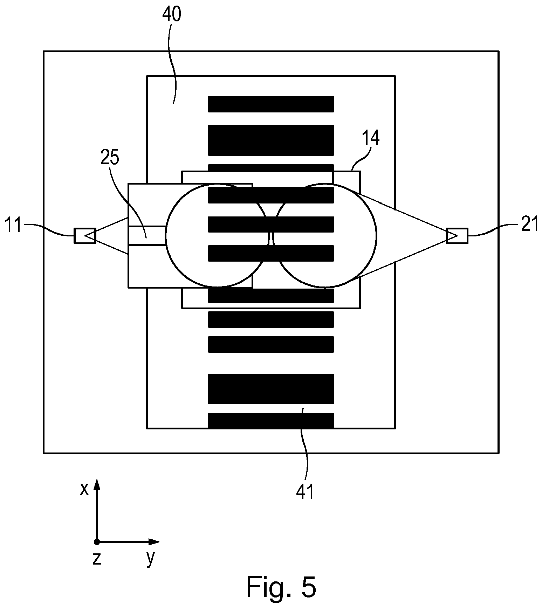

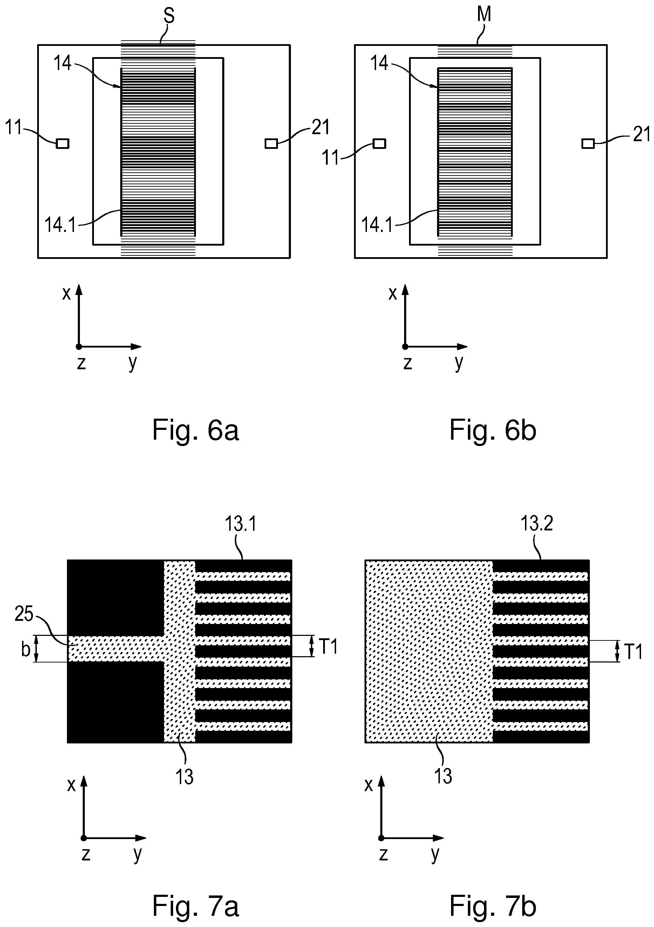

In der Abtasteinheit 30 der dargestellten Positionsmesseinrichtung sind zum einen die Komponenten des Abstandssensors angeordnet, d.h. eine erste Lichtquelle 11 in der ersten Emissionsebene EE, zwei auf einer Abtastplatte 13 angeordnete Abtastgitter 13.1, 13.2 sowie eine Detektoranordnung 14. Die Unter- und Oberseite der Abtastplatte 13 mit den jeweils darauf angeordneten Strukturen ist in den Figuren 7a und 7b gezeigt. Desweiteren ist in der Abtasteinheit 30 eine zweite Lichtquelle 21 in einer zweiten Emissionsebene EE platziert, die für die Positionsmessung entlang der zweiten Messrichtung x und die Erzeugung entsprechender Positionssignale genutzt wird. Im vorliegenden Ausführungsbeispiel fallen die erste und zweite Emissionsebene EE, in der die erste und zweite Lichtquelle 11, 21 angeordnet sind, zusammen. Dies ist im Rahmen der vorliegenden Erfindung jedoch nicht zwingend erforderlich, d.h. die erste und zweite Emissionsebene können auch in verschiedenen Ebenen platziert sein. Wie aus Figur 5 ersichtlich, ist die zweite Lichtquelle 21 somit in der gleichen Emissionsebene wie die erste Lichtquelle 11 in der Abtasteinheit 30 angeordnet, und zwar in y-Richtung auf der gegenüberliegenden Seite der Detektoranordnung 14. In der zweiten Messrichtung x sind beide Lichtquellen 11, 21 auf der gleichen Höhe in der Abtasteinheit 30 angeordnet. Die zweite Lichtquelle 21 kann ebenfalls als Punktlichtquelle ausgebildet sein; in Betracht käme jedoch auch eine flächige Lichtquelle, die mit Hilfe einer spaltförmigen Blende unmittelbar vor der lichtemittierenden Fläche auf die erforderliche Ausdehnung reduziert wird. Die zweite Lichtquelle 21 besitzt eine von der ersten Lichtquelle 11 unterschiedliche Emissionswellenlänge $\lambda_2$, die ebenfalls im o.g. Wellenlängenbereich zwischen 630nm und 950nm liegen kann. In einem möglichen Ausführungsbeispiel werden die Emissionswellenlängen $\lambda_1$, $\lambda_2$ der beiden Lichtquellen 11, 21 etwa gemäß $\lambda_1 = 630nm$ und $\lambda_2 = 850nm$ gewählt. Es sei an dieser Stelle darauf hingewiesen, dass die Wahl unterschiedlicher Emissionswellenlängen in der vorliegenden Anwendung des erfindungsgemäßen Abstandssensors nicht zwingend erforderlich ist.

Ebenfalls noch zusätzlich gegenüber dem reinen Abstandssensor ist in der vorliegenden Anwendung desselbigen eine spaltförmige Blende 25 in der Anordnungsebene des ersten Abtastgitters 13.1 in der Abtasteinheit 30 vorgesehen, d.h. auf derjenigen Seite der Abtastplatte 13, die der Maßverkörperung 40 zugewandt ist. Zur Funktion der zusätzlichen Elemente und insbesondere zur Erzeugung der Positionssignale entlang der zweiten Messrichtung x sei auf die nachfolgende Beschreibung verwiesen.

Die sich entlang der zweiten Messrichtung x erstreckende Maßverkörperung 40 umfasst einen Trägerkörper, auf dessen Oberseite eine Reflexions-Messteilung 41 angeordnet ist. Wie etwa aus der Darstellung in Figur 5 ersichtlich, besteht die Reflexions-Messteilung 41 aus entlang der zweiten Messrichtung x alternierend angeordneten Bereichen unterschiedlicher Reflektivität. Hierbei sind in der Figur die gering reflektierenden Bereiche dunkel dargestellt, die hoch reflektierenden Bereiche hell. Die Bereiche der Reflexions-Messteilung 41 erstrecken sich in der angegebenen y-Richtung hierbei nicht über die gesamte Breite der Maßverkörperung 40, am Rand derselbigen ist jeweils ein reflektierender Streifen vorgesehen, der als Reflektor für den Abstandssensor fungiert. Es sei an dieser Stelle darauf hingewiesen, dass auch im Fall der Reflexion des Abtaststrahlenbündels für die Abstandsmessung aus Bereichen in der Reflexions-Messteilung 41 die Funktionsfähigkeit der Abstandsmessung gewährleistet bleibt. Wie nachfolgend noch im Detail erläutert wird, sind hierzu bestimmte zusätzliche Maßnahmen vorgesehen, nämlich die spaltförmige Blende 25 und/oder die Wahl unterschiedlicher Emissionswellenlängen $\lambda_1$, $\lambda_2$ für die beiden Lichtquellen 11, 21. Entlang der zweiten Messrichtung x sind die Bereiche im vorliegenden Ausführungsbeispiel in einer aperiodischen Abfolge angeordnet, beispielsweise in Form eines Pseudo Random Codes (PRC).

Über das optische Auslesen bzw. Abtasten eines derartigen Codes kann die Absolutposition der Abtasteinheit 30 entlang der Messstrecke in x-Richtung bestimmt werden. Hierzu emittiert wie etwa aus Figur 4b ersichtlich die zweite Lichtquelle 21 Strahlenbündel in divergenter Form in Richtung der Maßverkörperung 40 bzw. der Reflexions-Messteilung 41. Ohne zwischengeschaltete weitere optische Elemente gelangen die Strahlenbündel dann auf die Reflexions-Messteilung 41 und werden davon in Richtung der Abtasteinheit 30 zurückreflektiert. In der Detektionsebene DE der Detektoranordnung 14 resultiert aufgrund der Wechselwirkung der Strahlenbündel mit der Reflexions-Messteilung 41 ein positionsabhängiges Muster, welches die Position der Abtasteinheit 30 gegenüber der Maßverkörperung 40 entlang der zweiten Messrichtung x angibt. Das entsprechende Muster wird hierbei über die Detektoranordnung 14 erfasst und von der - nicht dargestellten - Auswerteeinheit in eine absolute Positionsinformation umgewandelt; damit kann die Position der Abtasteinheit 30 entlang der zweiten Messrichtung x eindeutig bestimmt werden. Zur Erfassung des Musters in der Detektionsebene DE wird eine Detektoranordnung 14 verwendet, die identisch zur Detektoranordnung des eingangs beschriebenen Abstandssensors ausgebildet ist und aus einer entlang der zweiten Messrichtung x periodischen Anordnung einzelner, rechteckförmiger Detektorelemente 14.1 besteht, welche von der Auswerteeinheit einzeln auslesbar sind. Für die Positionsmessung entlang der zweiten Messrichtung x erweist sich dabei eine Detektorperiodizität im Bereich zwischen 20μm und 30μm als vorteilhaft, selbstverständlich kann aber auch eine andere Detektorperiodizität gewählt werden.

Der in die erläuterte Positionsmesseinrichtung integrierte Abstandssensor funktioniert prinzipiell wie der eingangs erläuterte Abstandssensor. Im Unterschied zum beschriebenen Abstandssensor ist jedoch im Strahlengang der zur Maßverkörperung 40 bzw. zum Reflektor propagierenden Strahlenbündel mit der Emissionswellenlänge $\lambda_1$ eine spaltförmige Blende 25 auf der Unterseite der Abtastplatte 13 angeordnet, wie dies in Figur 7a gezeigt ist. Die Längsrichtung der Blende 25 erstreckt sich hierbei in der angegebenen y-Richtung, also senkrecht zur zweiten Messrichtung x. Die von der ersten Lichtquelle 11 in der ersten Emissionsebene EE emittierten Strahlenbündel durchlaufen also zunächst diese Blende 25, bevor sie auf den Reflektor bzw. die Maßverkörperung 40 auftreffen. Auf diese Art und Weise wird eine neue, für die Abstandsmessung relevante erste Lichtquelle 11' in einer neuen ersten Emissionsebene EE' definiert. Als Folge daraus wird die in Gleichung (1) eingeführte Größe D, d.h. der Abstand zwischen erster Emissionsebene EE' und erstem Abtastgitter 13.1, dann gleich Null. Über die zusätzliche Blende 25 im Strahlengang wird sichergestellt, dass die Strukturen der Reflexions-Messteilung 41 die Signalerzeugung im Abstandssensor nicht stören, wenn die entsprechenden Strahlenbündel auf der Maßverkörperung 40 ggf. nicht nur vom unstrukturierten, hochreflektierenden Randbereich reflektiert werden, sondern möglicherweise auch auf Bereiche in der Reflexions-Messteilung 41 auftreffen und von dort in Richtung der beiden Abtastgitter 13.1, 13.2 zurückreflektiert werden. Die Blende 25 wirkt hierbei als Filter, über den störende Einflüsse der Reflexions-Messteilung 41 bei der Erzeugung der Abstandssignale minimiert werden können. Es hat sich als vorteilhaft erwiesen, wenn die Breite der Blende 25 der doppelten Strukturbreite b des kleinsten Bereichs in der Reflexions-Messteilung 41 entlang der zweiten Messrichtung x entspricht. Im Fall eines Pseudo-Random-Codes mit Manchester-Codierung würde die Strukturbreite damit der Breite eines Manchester-Bits entlang der zweiten Messrichtung x entsprechen.

Um eine möglichst zuverlässige Abstandsmessung in der Positionsmesseinrichtung mittels des erfindungsgemäßen Abstandssensors sicherzustellen, kann desweiteren in vorteilhafter Weise vorgesehen werden, dass die Reflexions-Messteilung 41 und/oder deren umgebende Bereiche auf der Maßverkörperung 40 eine wellenlängenabhängige Reflektivität besitzen, abgestimmt auf die Emissionswellenlängen $\lambda_1$, $\lambda_2$ der ersten und zweiten Lichtquelle 11, 21. So kann etwa die Reflexions-Messteilung 41 eine geringe Reflektivität für die erste Emissionswellenlänge $\lambda_1$ der ersten Lichtquelle 11 besitzen, während die umgebenden Bereiche auf der Maßverkörperung 40 bei dieser Wellenlänge $\lambda_1$ eine hohe Reflektivität aufweisen. Auf diese Art und Weise kann der eventuell störende Einfluss der Reflexions-Messteilung 41 auf die Signalerzeugung des Abstandssensors verringert werden, wenn möglicherweise Strahlenbündel nicht von einem gleichmäßig reflektierenden Bereich auf der Maßverkörperung 40 zurückreflektiert werden, sondern von der Reflexions-Messteilung 41.

Im Hinblick auf die Nutzung des erfindungsgemäßen Abstandssensors in der Positionsmesseinrichtung gibt es nunmehr verschiedene Möglichkeiten, von denen einige Varianten nachfolgend kurz erläutert seien.

So kann die Positionsmesseinrichtung mit dem integrierten erfindungsgemäßen Abstandssensor im Fall einer entsprechenden Messaufgabe etwa so betrieben werden, dass entweder eine Positionsmessung entlang der vertikalen ersten Messrichtung z oder aber eine Positionsmessung entlang der lateralen zweiten Messrichtung x erfolgt. Hierzu wird über die Auswerteeinheit wahlweise die erste oder zweite Lichtquelle 11, 21 aktiviert und je nach aktivierter Lichtquelle 11, 21 die Detektoranordnung 14 in den zugehörigen Auswertemodus umgeschaltet. Es wird dann entweder wie oben erläutert der Abstand ATA zwischen der Detektionsebene DE und dem Reflektor entlang der ersten Messrichtung z bestimmt oder aber die Position der Abtasteinheit 30 gegenüber der Maßverkörperung bzw. 40 der Reflexions-Messteilung 41 entlang der zweiten Messrichtung x. Diese beiden unterschiedlichen Betriebsarten sind in den Figuren 6a, 6b veranschaulicht.

So zeigt Figur 6a den Fall mit aktivierter erster Lichtquelle 11, bei dem ein periodisches Streifenmuster S in der Detektionsebene der Detektoranordnung 14 erzeugt wird. Über den zugehörigen Auswertemodus der Detektoranordnung 14 wird die Streifenmusterperiode VP des Streifenmusters S bestimmt und in Verbindung mit weiteren bekannten Geometrie-Parametern des Abstandssensors der Abstand ATA entlang der ersten Messrichtung z mit Hilfe von Gleichung (1) ermittelt.

In Figur 6b ist der Fall mit aktivierter zweiter Lichtquelle 21 gezeigt, bei dem in der Detektionsebene der Detektoranordnung 14 ein aperiodisches Muster M resultiert, das die Position der Abtasteinheit 30 entlang der zweiten Messrichtung x bezeichnet. Im zugehörigen Auswertemodus der Detektoranordnung 14 wird das aperiodische Muster wie oben beschrieben mit Hilfe der Detektoranordnung 14 erfasst und über die Auswerteeinheit die entsprechende Absolutposition der Abtasteinheit 30 bestimmt.

Desweiteren ermöglicht die Positionsmesseinrichtung mit dem integrierten erfindungsgemäßen optischen Abstandssensor einen Betrieb der Positionsmesseinrichtung, in dem bei einer erfolgenden Positionsmessung entlang der lateralen zweiten Messrichtung x der Nickwinkel der Abtasteinheit 30 gegenüber der Maßverkörperung 40 bzw. der Reflexions-Messteilung 41 bestimmbar ist. Wie eingangs erwähnt, gibt der Nickwinkel dabei die Verkippung der Abtasteinheit 30 um eine Nickachse an, die senkrecht zur zweiten Messrichtung x und parallel zur Messteilungsebene orientiert ist; in den dargestellten Ausführungsbeispielen ist die Nickachse demzufolge in der in den Figuren mit y bezeichneten Richtung orientiert. In Kenntnis des jeweiligen Nickwinkels können dann über die Auswerteeinheit die Positionssignale um Nickwinkel-abhängige Fehler korrigiert werden. Ein hierzu geeignetes Vorgehen wird nachfolgend beispielhaft kurz erläutert.

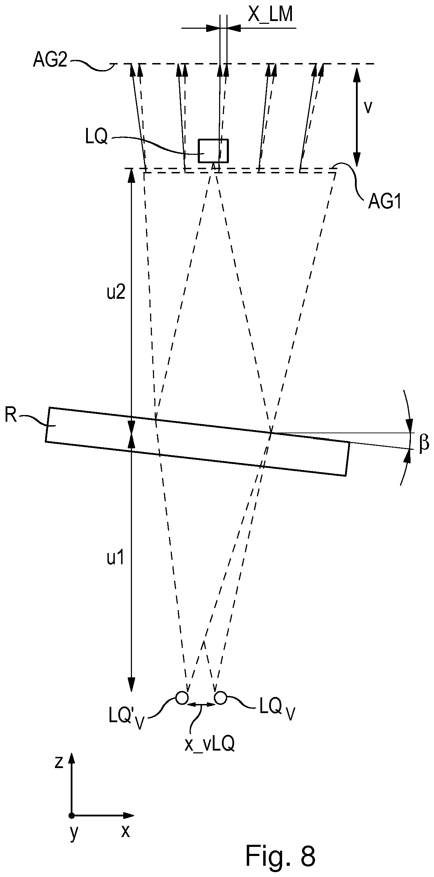

Zunächst sei in diesem Zusammenhang noch einmal darauf hingewiesen, dass mit der entsprechenden Positionsmesseinrichtung mit integriertem Abstandssensor über die erläuterte Abtastung ein periodisches (Vernier-) Streifenmuster S in der Detektionsebene der Detektoranordnung 14 erzeugt wird, wie es etwa in Figur 6a dargestellt ist. Mit Hilfe der schematisierten Darstellung in Figur 8 werden im Folgenden die Auswirkungen einer Reflektor-Verkippung in Nickrichtung auf die Abstandsmessung erläutert, insbesondere die Auswirkungen auf die Lage des erzeugten Streifenmusters. Hierbei wird ein Modell mit einer virtuellen Lichtquelle $LQ_v$ verwendet, in dem man die von der realen Lichtquelle LQ emittierten und vom Reflektor R zurückgeworfenen Strahlenbündel rückwärts verlängert und damit zu einer virtuellen Lichtquelle $LQ_v$ in einem dann formal transmittiven Aufbau kommt.

Eine Verkippung des Reflektors R um eine in y-Richtung verlaufende Achse um den Nickwinkel $\beta$ bewirkt eine Verschiebung der x-Position der virtuellen Lichtquelle $LQ_v$. In Figur 8 wird die um den Lichtquellen-Verschiebungsbetrag x_vLQ verschobene Lichtquelle mit $LQ_v'$ bezeichnet. Als Konsequenz der Lichtquellenverschiebung wird auch das projizierte Abbild des ersten Abtastgitters AG1 in x-Richtung gegenüber dem Fall mit dem unverkippten Reflektor R verschoben. Das projizierte Abbild des ersten Abtastgitters AG1 kommt damit um den Lichtmuster-Verschiebungsbetrag x_LM verschoben auf dem zweiten Abtastgitter AG2 an. Dividiert man den Lichtmuster-Verschiebungsbetrag x_LM durch die Periodizität T1' des projizierten Abbildes auf dem zweiten Abtastgitter AG2, so ergibt sich die Lichtmusterverschiebung auf dem zweiten Abtastgitter AG2, ausgedrückt als Phasenverschiebung. Das im Abstandssensor vorliegende, periodische Streifenmuster, welches aus der Wechselwirkung des projizierten Abbildes des ersten Abtastgitters AG1 mit dem zweiten Abtastgitter AG2 resultiert, erfährt die gleiche Phasenverschiebung; diese Phasenverschiebung wird nachfolgend mit Phi_LM bezeichnet. Die im Abstandssensor verwendete Detektoranordnung mit periodisch angeordneten Detektorelementen ist hierbei geeignet, diese Phasenverschiebung Phi_LM messtechnisch zu erfassen und somit als Phasensensor zu fungieren. Hierzu sind pro Periode des Streifenmusters mindestens drei Detektorelemente angeordnet, die dann im entsprechenden Raster über die Mehrzahl von Streifenmusterperioden miteinander elektrisch leitend verbunden werden.

Wie aus den obigen Beispielen ersichtlich, ist im Abstandssensor die Detektorbreite mit etwa 5μm deutlich kleiner als die Streifenmusterperiode des abgetasteten Streifenmusters, die in der Größenordnung von 1000μm liegt. Es werden daher in der Detektoranordnung vorzugsweise mehrere benachbarte einzelne Detektorelemente zusammengeschaltet und deren Ausgangssignale auf analogem oder digitalem Weg addiert. Die derart zusammengeschalteten Detektorelemente fungieren in der Detektoranordnung dann als einzelnes Detektorelement, welches zur Abtastung des Streifenmusters genutzt wird. Wie vorstehend erwähnt, sind mindestens drei derart zusammengeschaltete Detektorelemente pro Periode des Streifenmusters vorgesehen. Die jeweils ermittelte Streifenmusterperiodizität aus dem Abstandssensor gibt also das Raster vor, in dem die einzelnen Detektorelemente des Abstandssensors zu Detektorelementen des Phasensensors zusammengefasst werden müssen.

Wie nachfolgend erläutert, ist es mit Hilfe des erfindungsgemäßen Abstandssensors möglich, eine eventuell vorliegende Nickverkippung messtechnisch zu erfassen und die durch die Nickverkippung verfälschten Positionssignale in Bezug auf die Bewegung entlang der zweiten Messrichtung zu korrigieren.

Die vorstehend erwähnte Phasenverschiebung Phi_LM des projizierten Streifenmuster-Abbildes infolge der Nickverkippung des Reflektors R um den Nickwinkel β lässt sich dabei gemäß der nachfolgenden Beziehung (2) beschreiben:

$$Phi\_LM = x\_LM/T1' = ß \cdot u1/ ((1+(u1+u2)/v) \cdot T1) \quad (Gl. 2)$$

mit:

Phi_LM :=    Resultierende Phasenverschiebung des Streifenmusters, verursacht durch Nick-Kippung
x_LM :=    Lichtmuster-Verschiebungsbetrag, verursacht durch Nick-Kippung
T1' :=    Periodizität des auf das zweite Abtastgitter projizierten ersten Abtastgitters
ß :=    Nickwinkel um die Nick-Achse
u1 :=    Abstand zwischen (virtueller) Lichtquelle und Reflektor
u2 :=    Abstand zwischen Reflektor und erstem Abtastgitter
v :=    optisch wirksamer Abstand der beiden Abtastgitter
T1 :=    Gitterperiode der Abtastgitter

Aus der messtechnisch ermittelten Phasenverschiebung Phi_LM kann dann mit Hilfe der folgenden Beziehung (3) der Nickwinkel β bestimmt werden:

$$ß = Phi\_LM \cdot ((1+(u1+u2)/v) \cdot T1) / u1 \quad (Gl. 3)$$

mit:

ß :=    Nickwinkel um die Nick-Achse
Phi_LM :=    Resultierende Phasenverschiebung des Streifenmusters, verursacht durch Nick-Kippung
u1 :=    Abstand zwischen virtueller Lichtquelle und Reflektor
u2 :=    Abstand zwischen Reflektor und erstem Abtastgitter
v :=    optisch wirksamer Abstand der beiden Abtastgitter
T1 :=    Gitterperiode der Abtastgitter

Es wird demzufolge die Größe Phi_LM über den Phasensensor ermittelt; die Größe u2 ergibt sich aus dem erfassten Abstand ATA mit u2 = ATA - v - w, wobei w wie oben den Abstand zwischen Detektionsebene und zweitem Abtastgitter angibt und die restlichen Größen v, w, D und T1 zahlenmäßig bekannte geometrische Systemparameter darstellen.

Alternativ zur Gleichung (3) ergibt sich der Nickwinkel β in ausschließlich bekannten geometrischen Systemparametern und den messtechnisch erfassten Größen Phi_LM und ATA auch über die nachfolgende Beziehung (4):

$$ß = Phi\_LM \cdot ((1+(2(ATA-v-w)+D)/v) T1)/(ATA+D-v-w) \quad (Gl. 4)$$

mit:

β := Nickwinkel um die Nick-Achse

Phi_LM := Resultierende Phasenverschiebung des Streifenmusters, verursacht durch Nick-Kippung

ATA := Abstand zwischen Detektionsebene und Reflektor

v := optisch wirksamer Abstand der beiden Abtastgitter

w := Abstand zwischen Detektionsebene und zweitem Abtastgitter

D := Abstand zwischen erster Emissionsebene und erstem Abtastgitter

T1 := Gitterperiode der Abtastgitter

Ist auf diese Art und Weise der Nickwinkel β mit Hilfe der Auswerteeinheit bestimmt, so kann die Auswerteeinheit den Nickwinkel β verwenden, um die Positionssignale in Bezug auf eine Bewegung entlang der zweiten Messrichtung x um Nickwinkel-abhängige Fehler zu korrigieren. Die Stärke des Einflusses der (lokalen) Nickverkippung auf einen Positionsfehler $\Delta POS$ der Positionsmesseinrichtung für die zweite Messrichtung x hängt grundsätzlich von dessen Abtastcharakteristik ab. Im Fall der oben erläuterten Positionsmesseinrichtung für die zweite Messrichtung x ergibt sich ein Zusammenhang gemäß der folgenden Beziehung (5):

$$\Delta POS = \beta \cdot ATA/2 \qquad (Gl.\ 5)$$

mit:

$\Delta POS$ := Positionsfehler entlang der zweiten Messrichtung x

β := Nickwinkel um die Nick-Achse

ATA := Abstand zwischen Detektionsebene und Reflektor

Die durch die Positionsmesseinrichtung für die zweite Messrichtung x ermittelte Position POS kann somit durch eine eventuell vorliegende lokale Verkippung der Maßverkörperung um den Nickwinkel β verfälscht sein. Durch die verfügbare Funktionalität des in die Abtasteinheit zusätzlich integrierten, erfindungsgemäßen Abstandssensors kann für den nahezu gleichen Maßverkörperungsbereich der Abstand ATA und die lokale Nickverkippung β ermittelt und daraus eine Korrekturgröße in Form des Positionsfehlers $\Delta POS$ bestimmt werden. Auf dieser Art und Weise lässt sich dann eine Korrektur des Positionswerts entlang der zweiten Messrichtung x auf Basis der mit Hilfe des erfindungsgemäßen Abstandssensors ermittelten Größen folgendermaßen vornehmen:

$$POS' = POS - \Delta POS \qquad (Gl.\ 6)$$

mit:

POS' := korrigierter Positionswert entlang der zweiten Messrichtung x

POS := gemessener Positionswert entlang der zweiten Messrichtung x

$\Delta POS$ := Positionsfehler entlang der zweiten Messrichtung x

Im Rahmen der vorliegenden Erfindung gibt es außer den erläuterten Varianten selbstverständlich noch weitere Ausführungsmöglichkeiten.

## Patentansprüche

1. Optischer Abstandssensor mit einer ersten Lichtquelle (1; 11) in einer ersten Emissionsebene (EE), einem Reflektor (2), zwei als Transmissionsgitter ausgebildeten Abtastgittern (3.1, 3.2; 13.1, 13.2) mit jeweils einer definierten Gitterperiode (T1), einer Detektoranordnung (4; 14) sowie einer Auswerteeinheit (5), wobei

- die von der ersten Lichtquelle (1; 11) emittierten Strahlenbündel den Reflektor (2) beaufschlagen und eine Rückreflexion erfahren,
- die rückreflektierten Strahlenbündel anschließend das erste und zweite Abtastgitter (3.1, 3.2; 13.1, 13.2) durchlaufen und
- in einer Detektionsebene (DE) der Detektoranordnung (4; 14) aus der Wechselwirkung der Strahlenbündel mit den durchlaufenen Abtastgittern (3.1, 3.2; 13.1, 13.2) ein periodisches Streifenmuster (S) mit einer definierten Streifenmusterperiode (VP) resultiert und

- die Auswerteeinheit (5) dazu ausgebildet und eingerichtet ist, aus der ermittelten Streifenmusterperiode (VP) und weiteren bekannten Geometrie-Parametern (v, T1, D) des Abstandssensors den Abstand (ATA) zwischen der Detektionsebene (DE) und dem Reflektor (2) entlang einer ersten Messrichtung (z) zu bestimmen, die senkrecht zum Reflektor (2) orientiert ist.

2. Optischer Abstandssensor nach Anspruch 1, wobei die beiden Abtastgitter (3.1, 3.2; 13.1, 13.2) auf der Ober- und Unterseite einer transparenten Abtastplatte (3; 13) angeordnet sind.

3. Optischer Abstandssensor nach Anspruch 1 oder 2, wobei die beiden Abtastgitter (3.1, 3.2; 13.1, 13.2) die identische Gitterperiode (T1) aufweisen.

4. Optischer Abstandssensor nach Anspruch 3, wobei die Auswerteeinheit (5) dazu ausgebildet und eingerichtet ist, den Abstand (ATA) zwischen der Detektionsebene (DE) und dem Reflektor (2) gemäß der Beziehung

$$ATA = 0.5 \cdot (VP / T1 + 1) \cdot v + 0.5 \cdot w - 0.5 \cdot D$$

zu ermitteln, mit
ATA := Abstand zwischen Detektionsebene und Reflektor
VP := Streifenmusterperiode in Detektionsebene
T1 := Gitterperiode der Abtastgitter
v := optisch wirksamer Abstand der beiden Abtastgitter
w := Abstand zwischen Detektionsebene und zweitem Abtastgitter
D := Abstand zwischen erster Emissionsebene und erstem Abtastgitter

5. Optischer Abstandssensor nach mindestens einem der vorhergehenden Ansprüche, wobei die erste Lichtquelle, die Abtastgitter sowie die Detektoranordnung in einer Abtasteinheit angeordnet sind, die mindestens entlang der ersten Messrichtung gegenüber dem Reflektor relativ-beweglich angeordnet ist.

6. Positionsmesseinrichtung mit einem Abstandssensor nach Anspruch 1, wobei

- die Positionsmesseinrichtung eine Positionsbestimmung entlang einer zweiten Messrichtung (x) ermöglicht, entlang der eine Abtasteinheit (30) gegenüber einer Maßverkörperung (40) mit einer Reflexions-Messteilung (41) relativ-beweglich angeordnet ist und die zweite Messrichtung (x) senkrecht zur ersten Messrichtung (z) orientiert ist und
- die Abtasteinheit (30) neben der ersten Lichtquelle (11), den zwei Abtastgittern (13.1, 13.2) und der Detektoranordnung (14) eine zweite Lichtquelle (21) in einer zweiten Emissionsebene (EE) umfasst und
- die sich entlang der zweiten Messrichtung (x) erstreckende Maßverkörperung (40) als Reflektor fungiert, und
- die von der zweiten Lichtquelle (21) emittierten Strahlenbündel die Reflexions-Messteilung (41) beaufschlagen und eine Rückreflexion erfahren und
- in der Detektionsebene (DE) der Detektoranordnung (14) aus der Wechselwirkung der Strahlenbündel mit der Reflexions-Messteilung (41) ein positionsabhängiges Muster (M) resultiert, das die Position der Abtasteinheit (30) gegenüber der Maßverkörperung (40) entlang der zweiten Messrichtung (x) angibt.

7. Positionsmesseinrichtung nach Anspruch 6, wobei in der Abtasteinheit (30) in der Anordnungsebene des ersten Abtastgitters (13.1) eine spaltförmige Blende (25) derart angeordnet ist, dass die von der ersten Lichtquelle (11) emittierten Strahlenbündel die Blende (25) durchlaufen, bevor sie auf die Maßverkörperung (40) auftreffen.

8. Positionsmesseinrichtung nach Anspruch 7, wobei die Breite (b) der Blende (25) der doppelten Strukturbreite (b) der Reflexions-Messteilung (41) entspricht.

9. Positionsmesseinrichtung nach Anspruch 6, wobei die erste und zweite Lichtquelle (11, 21) jeweils als Punktlichtquelle ausgebildet sind.

10. Positionsmesseinrichtung nach Anspruch 6, wobei die erste und zweite Lichtquelle (11, 21) verschiedene Emissionswellenlängen aufweisen.

11. Positionsmesseinrichtung nach Anspruch 6, wobei die Reflexions-Messteilung (41) und/oder deren umgebende Bereiche auf der Maßverkörperung (40) eine wellenlängenabhängige Reflektivität aufweisen.

12. Positionsmesseinrichtung nach Anspruch 10 und 11, wobei die erste Lichtquelle (11) eine Emissionswellenlänge aufweist, für die die Reflexions-Messteilung (41) eine geringe Reflektivität und deren umgebende Bereiche auf der Maßverkörperung (40) eine hohe Reflektivität besitzen.

13. Positionsmesseinrichtung nach Anspruch 6, wobei die Detektoranordnung (14) eine periodische Anordnung optoelektronischer Detektorelemente (14.1) entlang der zweiten Messrichtung (x) umfasst und die Detektorelemente (14.1) über die Auswerteeinheit einzeln auslesbar sind.

14. Positionsmesseinrichtung nach Anspruch 6, wobei die Auswerteeinheit dazu eingerichtet und ausgebildet ist, wahlweise eine der beiden Lichtquellen (11, 21) zu aktivieren und je nach aktivierter Lichtquelle (11; 21) die Detektoranordnung (14) in den zur aktivierten Lichtquelle gehörigen Auswertemodus umzuschalten, um entweder den Abstand (ATA) zwischen der Detektionsebene (DE) und dem Reflektor entlang der ersten Messrichtung (z) zu bestimmen oder die Position der Abtasteinheit (30) gegenüber der Reflexions-Messteilung (41) entlang der zweiten Messrichtung (x) zu bestimmen.

15. Positionsmesseinrichtung nach Anspruch 6, wobei die Auswerteeinheit desweiteren dazu ausgebildet und eingerichtet ist, aus den über die Detektoranordnung (14) erfassten Signalen den Nickwinkel der Abtasteinheit (30) gegenüber der Reflexions-Messteilung (41) zu bestimmen, wobei der Nickwinkel die Verkippung der Abtasteinheit (30) um eine Achse (y) angibt, die senkrecht zur zweiten Messrichtung (x) und parallel zur Messteilungsebene orientiert ist.

16. Positionsmesseinrichtung nach Anspruch 15, wobei die Auswerteeinheit desweiteren dazu ausgebildet und eingerichtet ist, Positionssignale in Bezug auf eine Bewegung entlang der zweiten Messrichtung (x) um Nickwinkel-abhängige Fehler zu korrigieren.

## Claims

1. Optical distance sensor having a first light source (1; 11) in a first emission plane (EE), a reflector (2), two scanning gratings (3.1, 3.2; 13.1, 13.2), embodied as transmission gratings and each with a defined grating period (T1), a detector arrangement (4; 14) and an evaluation unit (5), wherein

   - the beams emitted by the first light source (1; 11) strike the reflector (2) and experience a return reflection,
   - the return-reflected beams subsequently pass through the first and the second scanning grating (3.1, 3.2; 13.1, 13.2) and
   - a periodic stripe pattern (S) with a defined stripe pattern period (VP) arises in a detection plane (DE) of the detector arrangement (4; 14) from the interaction of the beams with the passed-through scanning gratings (3.1, 3.2; 13.1, 13.2) and
   - the evaluation unit (5) is embodied and configured to determine the distance (ATA) between the detection plane (DE) and the reflector (2) along a first measurement direction (z), which is oriented perpendicular to the reflector (2), from the ascertained stripe pattern period (VP) and further known geometry parameters (v, T1, D) of the distance sensor.

2. Optical distance sensor according to Claim 1, wherein the two scanning gratings (3.1, 3.2; 13.1, 13.2) are arranged on the upper and lower side of a transparent scanning plate (3; 13).

3. Optical distance sensor according to Claim 1 or 2, wherein the two scanning gratings (3.1, 3.2; 13.1, 13.2) have the identical grating period (T1).

4. Optical distance sensor according to Claim 3, wherein the evaluation unit (5) is embodied and configured to ascertain the distance (ATA) between the detection plane (DE) and the reflector (2) according to the relationship

$$ATA = 0.5 \times (VP/T1+1) \times v + 0.5 \times w - 0.5 \times D,$$

where

ATA := distance between the detection plane and the reflector,
VP := stripe pattern period in the detection plane,
T1 := grating period of the scanning gratings,
v := optically effective distance between the two scanning gratings,
w := distance between the detection plane and the second scanning grating,
D := distance between the first emission plane and the first scanning grating.

5. Optical distance sensor according to at least one of the preceding claims, wherein the first light source, the scanning gratings and the detector arrangement are arranged in a scanning unit which is arranged with relative movement in relation to the reflector, at least along the first measurement direction.

6. Position measuring device having a distance sensor according to Claim 1, wherein

- the position measuring device facilitates a position determination along a second measurement direction (x), along which a scanning unit (30) is arranged with relative movement in relation to a material measure (40) with a reflection measurement graduation (41) and the second measurement direction (x) is oriented perpendicular to the first measurement direction (z) and
- the scanning unit (30) comprises a second light source (21) in a second emission plane (EE) in addition to the first light source (11), the two scanning gratings (13.1, 13.2) and the detector arrangement (14), and
- the material measure (40) extending along the second measurement direction (x) acts as a reflector, and
- the beams emitted by the second light source (21) strike the reflection measurement graduation (41) and experience a return reflection and
- a position-dependent pattern (M) which specifies the position of the scanning unit (30) in relation to the material measure (40) along the second measurement direction (x) emerges in the detection plane (DE) of the detector arrangement (14) from the interaction of the beams with the reflection measurement graduation (41).

7. Position measuring device according to Claim 6, wherein a slot-shaped diaphragm (25) is arranged in the scanning unit (30) in the arrangement plane of the first scanning grating (13.1) in such a way that the beams emitted by the first light source (11) pass through the diaphragm (25) before they strike the material measure (40).

8. Position measuring device according to Claim 7, wherein the width (b) of the diaphragm (25) corresponds to twice the structure width (b) of the reflection measurement graduation (41).

9. Position measuring device according to Claim 6, wherein the first and second light source (11, 21) are each embodied as a point light source.

10. Position measuring device according to Claim 6, wherein the first and the second light source (11, 21) have different emission wavelengths.

11. Position measuring device according to Claim 6, wherein the reflection measurement graduation (41) and/or the surrounding regions thereof on the material measure (40) have a wavelength-dependent reflectivity.

12. Position measuring device according to Claim 10 and 11, wherein the first light source (11) has an emission wavelength for which the reflection measurement graduation (41) has a low reflectivity and the surrounding regions thereof on the material measure (40) have a high reflectivity.

13. Position measuring device according to Claim 6, wherein the detector arrangement (14) comprises a periodic arrangement of optoelectronic detector elements (14.1) along the second measurement direction (x) and the detector elements (14.1) are individually readable by way of the evaluation unit.

14. Position measuring device according to Claim 6, wherein the evaluation unit is configured and embodied to selectively activate one of the two light sources (11, 21) and switch the detector arrangement (14) into the evaluation mode associated with the active light source depending on the activated light source (11; 21) in order either to determine the distance (ATA) between the detection plane (DE) and the reflector along the first measurement direction (z) or to determine the position of the scanning unit (30) in relation to the reflection measurement graduation (41) along the second measurement direction (x).

**15.** Position measuring device according to Claim 6, wherein the evaluation unit further is embodied and configured to determine the pitch angle of the scanning unit (30) in relation to the reflection measurement graduation (41) from the signals captured by way of the detector arrangement (14), wherein the pitch angle specifies the tilt of the scanning unit (30) about an axis (y) which is oriented perpendicular to the second measurement direction (x) and parallel to the measurement graduation plane.

**16.** Position measuring device according to Claim 15, wherein the evaluation unit moreover is embodied and configured to correct position signals in relation to a movement along the second measurement direction (x) from pitch-angle-dependent errors.

**Revendications**

**1.** Capteur télémétrique optique comportant une source lumineuse (1 ; 11) dans un premier plan d'émission (EE), un réflecteur (2), deux réseaux de balayage (3.1, 3.2 ; 13.1, 13.2) réalisés sous la forme de réseaux de transmission présentant respectivement une période de réseau définie (T1), un système détecteur (4 ; 14) et une unité d'évaluation (5), dans lequel

- les faisceaux de rayonnement émis par la première source lumineuse (1 ; 11) sont incidents sur le réflecteur (2) et sont soumis à une rétro-réflexion,
- les faisceaux de rayonnement rétroréfléchis passent ensuite à travers les premier et second réseaux de balayage (3.1, 3.2 ; 13.1, 13.2), et
- un motif de franges périodique (S) ayant une période de motif de frange définie (VP) résulte de l'interaction entre les faisceaux de rayonnement et les réseaux de balayage (3.1, 3.2, 13.1, 13.2) traversés dans un plan de détection (DE) du système détecteur (4 ; 14), et
- l'unité d'évaluation (5) est configurée et conçue pour déterminer, à partir de la période de motif de franges (VP) déterminée et d'autres paramètres géométriques (v, T1, D) connus du capteur télémétrique, la distance (ATA) entre le plan de détection (DE) et le réflecteur (2) dans une première direction de mesure (z) qui est orientée perpendiculairement au réflecteur (2) .

**2.** Capteur télémétrique optique selon la revendication 1, dans lequel les deux réseaux de balayage (3.1, 3.2 ; 13.1, 13.2) sont disposés sur la face supérieure ou inférieure d'une lame de balayage (3, 13) transparente.

**3.** Capteur télémétrique optique selon la revendication 1 ou 2, dans lequel les deux réseaux de balayage (3.1, 3.2 ; 13.1, 13.2) présentent la même période de réseau (T1).

**4.** Capteur télémétrique optique selon la revendication 3, dans lequel l'unité d'évaluation (5) est configurée et conçue pour déterminer la distance (ATA) entre le plan de détection (DE) et le réflecteur (2) conformément à la relation suivante :

$$ATA = 0,5 \cdot (VP/T1 + 1) \cdot v + 0,5 \cdot w - 0,5 \cdot D$$

où

ATA = distance entre le plan de détection et le réflecteur
VP = période du motif de franges dans le plan de détection
T1 = période de réseau du réseau de balayage
v = distance optiquement active entre les deux réseaux de balayage
w = distance entre le plan de détection et le second réseau de balayage
D = distance entre le premier plan d'émission et le premier réseau de balayage.

**5.** Capteur télémétrique optique selon au moins l'une des revendications précédentes, dans lequel la première source lumineuse, les réseaux de balayage ainsi que le système détecteur sont disposés dans une unité de balayage qui est disposée de manière mobile au moins suivant la première direction de mesure par rapport au réflecteur.

**6.** Dispositif de mesure de position comportant un capteur télémétrique selon la revendication 1, dans lequel

- le dispositif de mesure de position permet une détermination de position suivant une seconde direction de mesure (x) suivant laquelle une unité de balayage (30) est disposée de manière mobile par rapport à un étalon de mesure (40) présentant une graduation de mesure par réflexion (41) et la seconde direction de mesure (x) est orientée perpendiculairement à la première direction de mesure (z), et

- l'unité de balayage (30) comprend, outre la première source lumineuse (11), les deux réseaux de balayage (13.1, 13.2) et le système détecteur (14), une seconde source lumineuse (21) disposée dans un second plan d'émission (EE), et

- l'étalon de mesure (40) s'étendant suivant la seconde direction de mesure (x) fonctionne en tant que réflecteur, et

- les faisceaux de rayonnement émis par la seconde source lumineuse (21) sont incidents sur la graduation de mesure par réflexion (41) et sont soumis à une rétro-réflexion, et

- il résulte de l'interaction entre les faisceaux de rayonnement et la graduation de mesure par réflexion (41) dans le plan de détection (DE) du dispositif détecteur (14), un motif (M) dépendant de la position qui indique la position de l'unité de balayage (30) suivant la seconde direction de mesure (x) par rapport à l'étalon de mesure (40).

7. Dispositif de mesure de position selon la revendication 6, dans lequel un diaphragme (25) en forme de fente est disposé à l'intérieur de l'unité de balayage (30), dans le plan d'agencement du premier réseau de balayage (13.1), de manière à ce que les faisceaux de rayonnement émis par la première source lumineuse (11) passent à travers le diaphragme (25) avant d'atteindre l'étalon de mesure (40).

8. Dispositif de mesure de position selon la revendication 7, dans lequel la largeur (b) du diaphragme (25) correspond au double de la largeur structurelle (b) de la graduation de mesure par réflexion (41).

9. Dispositif de mesure de position selon la revendication 6, dans lequel les première et seconde sources lumineuses (11, 21) sont respectivement réalisées sous la forme de sources lumineuses ponctuelles.

10. Dispositif de mesure de position selon la revendication 6, dans lequel les première et seconde sources lumineuses (11, 21) présentent des longueurs d'onde d'émission différentes.

11. Dispositif de mesure de position selon la revendication 6, dans lequel la graduation de mesure par réflexion (41) et/ou la région qui l'entoure sur l'étalon de mesure (40) présentent une réflectivité dépendant de la longueur d'onde.

12. Dispositif de mesure de position selon les revendications 10 et 11, dans lequel la première source lumineuse (11) présente une longueur d'onde d'émission pour laquelle la graduation de mesure par réflexion (41) possède une faible réflectivité et dont la région qui l'entoure sur l'étalon de mesure (40) possède une réflectivité élevée.

13. Dispositif de mesure de position selon la revendication 6, dans lequel le système détecteur (14) comprend un agencement périodique d'éléments détecteurs (14.1) optoélectroniques suivant la seconde direction de mesure (x) et dans lequel les éléments détecteurs (14.1) peuvent être lus individuellement par l'intermédiaire de l'unité d'évaluation.

14. Dispositif de mesure de position selon la revendication 6, dans lequel l'unité d'évaluation est configurée et conçue pour activer de manière sélective l'une des deux sources lumineuses (11, 21) et pour faire basculer le système détecteur (14) dans le mode d'évaluation qui correspond à la source lumineuse (11 ; 21) activée afin de déterminer soit la distance (ATA) entre le plan de détection (DE) et le réflecteur suivant la première direction de mesure (z), soit la position de l'unité de balayage (30) par rapport à la graduation de mesure par réflexion (41) suivant la seconde direction de mesure (x).

15. Dispositif de mesure de position selon la revendication 6, dans lequel l'unité d'évaluation est en outre configurée et conçue pour déterminer à partir des signaux détectés par l'intermédiaire du système détecteur (14) l'angle d'inclinaison de l'unité de balayage (30) par rapport à la graduation de mesure par réflexion (41), dans lequel l'angle d'inclinaison indique le pivotement de l'unité de balayage (30) autour d'un axe (y) qui est orienté perpendiculairement à la seconde direction de mesure (x) et parallèlement au plan de la graduation de mesure.

16. Dispositif de mesure de position selon la revendication 15, dans lequel l'unité d'évaluation est en outre configurée et conçue pour corriger des signaux de position par rapport à un déplacement effectué suivant la seconde direction de mesure (x) afin d'éliminer les erreurs dépendant de l'angle d'inclinaison.

Fig. 1

Fig. 2

Fig. 3a

Fig. 3b

Fig. 4a

Fig. 4b

Fig. 5

Fig. 6a

Fig. 6b

Fig. 7a

Fig. 7b

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7474091 B2
- DE 102010043615 A1
- US 4025197 A
- DE 9018079 U1
- EP 2450672 A2